# FASCICULE DE BREVET EUROPEEN

(11) **EP 2 456 684 B1**
(45) Date de publication et mention de la délivrance du brevet: **04.09.2013**
(21) Numéro de dépôt: 10752068.6
(22) Date de dépôt: 21.07.2010
(51) Int. Cl.: F16L 3/233, B65D 63/10, H02G 3/32

(54) **COLLIER D'ASSEMBLAGE AUTOBLOQUANT**
Anordnung mit selbstblockierender Schelle
SELF-LOCKING ASSEMBLY COLLAR

(30) Priorité: 21.07.2009 FR 0903594
(43) Date de publication de la demande: 30.05.2012
(73) Titulaire: RAM CHEVILLES ET FIXATIONS, 91320 Wissous (FR)
(72) Inventeur: SERGENT, Gilbert, 13610 Le Puy Sainte Réparade (FR)
(74) Mandataire: Bertrand, Didier
(86) Numéro de dépôt international: PCT/FR2010/051542
(87) Numéro de publication internationale: WO 2011/010066

(56) Documents cités:
- FR-A1- 2 707 352
- FR-A1- 2 742 489

## Description

La présente invention se rapporte à un collier d'assemblage autobloquant permettant notamment, mais non exclusivement, de maintenir en faisceau des éléments de forme allongée tels que des câbles, par exemple dans l'habitat.

De tels colliers d'assemblage sont bien connus, et ils présentent généralement une lanière souple crantée de forme allongée et munie d'une tête de blocage à l'une des extrémités de ladite lanière. La lanière souple crantée est adaptée à être recourbée sur elle-même en formant une boucle de manière à pouvoir insérer l'autre desdites extrémités de ladite lanière à travers la tête de blocage parallèlement à ladite une des extrémités. Aussi, de tels colliers d'assemblage sont dénommés : « à entrée parallèle ». La tête de blocage présente une extrémité d'entrée, et à l'opposé une extrémité de sortie ; ainsi ladite autres desdites extrémités de ladite lanière qui est libre, est apte à être insérée à travers l'extrémité d'entrée pour être tirée à travers l'extrémité de sortie et ainsi pour resserrer la boucle à loisir.

Les caractéristiques recherchées de ces colliers d'assemblage sont généralement, une introduction aisée sans effort de ladite autre desdites extrémités à travers ladite extrémité d'entrée de la tête de blocage vers ladite extrémité de sortie et à l'inverse, une résistance à la traction dans le sens opposé de manière à conserver le diamètre de boucle ajusté lors du serrage.

Aussi, ladite tête de blocage présente une partie d'appui apte à recevoir la lanière crantée en appui et une languette crantée en regard destiné à venir en prise dans les crans de la lanière crantée. La languette crantée est alors mobile par rapport à ladite partie d'appui et ladite lanière crantée est destinée à être engagée entre ladite partie d'appui et ladite languette crantée lorsque ladite lanière crantée est enfilée à travers ladite tête de blocage. Lorsque l'extrémité libre de la lanière est relâchée et que ladite boucle est mise sous tension par serrage autour d'un faisceau, la languette crantée vient alors s'arc-bouter contre ladite lanière crantée, en pivotant de l'extrémité d'entrée vers l'extrémité de sortie de la tête de blocage. Partant, ladite partie crantée est entraînée vers ladite partie d'appui pour prendre en étau ladite lanière crantée et ainsi, coincer la lanière crantée à l'intérieur de la tête de blocage.

Un tel collier d'assemblage est décrit dans le document FR 2 742 489. On observera que la tête de blocage de ce collier d'assemblage est relativement proéminente. Au surplus, le moulage d'une seule pièce d'un tel type de collier est relativement complexe à mettre en oeuvre. Par ailleurs, le document FR2707352 dévoile le préambule de la revendication 1.

Aussi, un problème qui se pose et que vise à résoudre la présente invention est de fournir un collier d'assemblage moins complexe qui puisse être aisément moulé et aussi, qui soit relativement moins encombrant.

Dans le but de résoudre ce problème, la présente invention propose un collier d'assemblage autobloquant comprenant une lanière crantée et une tête de blocage longitudinale solidaire de ladite lanière crantée. Ladite tête de blocage longitudinale présente une extrémité de liaison reliée à ladite lanière crantée et à l'opposé, une extrémité d'entrée adaptée à recevoir une extrémité libre de ladite lanière crantée pour enfiler ladite lanière crantée à travers ladite tête de blocage longitudinale en formant une boucle. Par ailleurs, ladite tête de blocage présente une partie d'appui et une partie crantée en regard, ladite partie crantée étant mobile par rapport à ladite partie d'appui, et ladite lanière crantée est destinée à être engagée entre ladite partie d'appui et ladite partie crantée lorsque ladite lanière crantée est enfilée à travers ladite tête de blocage longitudinale. Ladite partie crantée est alors destinée à coopérer avec ladite lanière crantée lorsque ladite boucle est mise sous tension de manière à entraîner ladite partie crantée vers ladite partie d'appui pour prendre en étau ladite lanière crantée. Selon l'invention, ladite partie crantée et ladite partie d'appui sont reliées ensemble par des billetts latérales pour permettre le pivotement de ladite partie crantée de ladite extrémité de liaison vers ladite extrémité d'entrée de ladite tête de blocage longitudinale lorsque ladite partie crantée coopère avec ladite lanière crantée.

Ainsi, une caractéristique de l'invention réside dans la mise en oeuvre d'une partie crantée sur la partie d'appui et mobile en pivotement entre une position où elle est située à distance de la partie d'appui et une position où elle est rapprochée de la partie d'appui en pivotant vers l'extrémité d'entrée de la tête de blocage de manière à former étau pour emprisonner la lanière crantée entre partie d'appui et partie crantée. De la sorte, plus la boucle est serrée lors de sa formation autour d'un faisceau de câbles quelconque, plus les forces de rappel qui s'exercent en tension sur la lanière crantée et partant, sur la tête de blocage, provoqueront le serrage de la lanière crantée entre la partie d'appui et la partie crantée. En effet, ainsi qu'on l'expliquera ci-après, la lanière crantée est réalisée en matière plastique et elle présente ainsi une certaine élasticité longitudinale. Lors de son serrage à travers la tête de blocage et autour du faisceau de câbles, la lanière crantée est étirée en extension et dès que son extrémité libre est relâchée elle tend à reprendre sa dimension originelle et exerce ainsi une traction à travers la tête de blocage à l'opposé de l'extrémité d'entrée. Plus cette force de traction est élevée et plus la partie crantée et la partie d'appui se rapproche l'une de l'autre, car elles sont entraînées à force en pivotement l'une vers l'autre et elles bloquent alors en étau la lanière crantée.

De plus, ladite partie crantée pivote avantageusement autour d'un axe de pivotement sensiblement parallèle à ladite partie d'appui. Aussi, plus la partie crantée est rapprochée de la partie d'appui, et moins la tête de blocage est épaisse. De la sorte, elle est moins proéminente que les têtes de blocage selon l'art antérieur, où à l'inverse l'arc-boutement de la languette crantée tendait à provoquer le gonflement dans le sens de l'épaisseur de la tête de blocage. Car en effet, selon l'art antérieur la tête de blocage comprend une partie d'appui et une paroi opposée séparée par un chemin de passage de la lanière crantée, et la languette crantée est montée mobile en pivotement dans cette paroi opposée et elle est orientée dans un sens opposé à l'extrémité d'entrée de la tête de blocage. Ainsi, lorsque la languette crantée vient en prise sur la lanière crantée, elle s'arc-boute et tend à provoquer l'écartement de ladite paroi opposée et de ladite partie d'appui et partant, le gonflement de la tête de blocage.

Au surplus, ledit axe de pivotement de ladite partie crantée s'étend, de préférence, dans un plan moyen défini par ladite partie d'appui. Ainsi, les capacités de rapprochement de la partie d'appui et de la partie crantée sont-elles encore plus importantes et partant, les capacités de serrage également. En outre, ledit axe de pivotement de ladite partie crantée s'étend sensiblement perpendiculairement à ladite tête de blocage longitudinale, de manière à rendre plus efficace le pivotement la partie crantée contre la partie d'appui lorsque les forces de traction s'exercent sur la tête de blocage.

En outre, ladite partie crantée est également mobile en pivotement de ladite extrémité d'entrée vers ladite extrémité de liaison de ladite tête de blocage longitudinale pour écarter ladite partie crantée de ladite partie d'appui, lorsqu'à l'inverse ladite lanière crantée est enfilée à travers ladite tête de blocage longitudinale pour serrer la boucle formée avec ladite lanière autour d'un faisceau quelconque. Cela permet de rendre encore plus aisée l'introduction de la lanière crantée à travers la tête de blocage.

Par ailleurs, dans le but d'augmenter l'effort de rapprochement de la partie d'appui et de la partie crantée, ladite lanière crantée présente des crans de lanière inclinés dans un sens opposé à ladite extrémité libre de lanière, tandis que ladite partie crantée présente des crans de partie crantée inclinés dans un sens opposé à ladite extrémité d'entrée de ladite tête de blocage longitudinale. De la sorte, les efforts de tension sur la boucle provoquent au surplus le glissement des crans de la partie crantée par rapport aux crans de la lanière, en prise respectivement les uns dans les autres, ce qui permet en formant rampe, de rapprocher également la partie crantée de la partie d'appui ainsi qu'on l'expliquera plus en détail ci-après. Cela participe bien évidemment au serrage de la lanière crantée à travers la tête de blocage.

Avantageusement, ladite partie crantée et ladite partie d'appui sont reliées ensemble par des moyens flexibles. Ainsi, la partie crantée et la partie d'appui peuvent être maintenues à distance l'une de l'autre dans une position de repos, lorsque la tête de blocage est libre de la lanière crantée ; et à partir de cette position de repos, la partie crantée peut être écartée de la partie d'appui ou bien à l'inverse rapprochée. En revanche, lorsqu'elle est relâchée, la partie crantée retrouve la position de repos.

Selon un mode de mise en oeuvre de l'invention particulièrement avantageux, les biellettes latérales sont couplées deux à deux de part et d'autre de la lanière crantée qui traverse la tête de blocage. Préférentiellement, lesdites biellettes latérales comprennent au moins deux paires de biellettes latérales opposées respectivement reliées à ladite partie crantée et à ladite partie d'appui pour former deux parallélogrammes déformables aptes à maintenir ladite partie crantée et ladite partie d'appui sensiblement parallèles entre elles. De la sorte, lorsque la tension s'exerce dans la boucle, les deux paires de biellettes maintiennent la partie crantée sensiblement parallèlement à la partie d'appui, ce qui permet de maintenir les crans de la partie crantée selon une direction constante par rapport à la lanière crantée. Cela permet aux crans respectivement de la partie crantée et de la lanière crantée d'être parfaitement engagés les uns dans les autres et contribue ainsi à un meilleur blocage de la lanière crantée à travers la tête de blocage.

On observera alors, que tout point de la partie crantée situé entre la paire de biellettes est apte à pivoter autour d'un axe parallèle à ladite partie d'appui, ledit axe étant situé entre la paire de biellettes.

De plus, selon une caractéristique de l'invention particulièrement avantageuse, le collier d'assemblage autobloquant est moulé d'une seule pièce dans un matériau polymère, ce qui permet de le produire à un coût avantageux.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle d'un collier d'assemblage autobloquant conforme à l'invention et dans une première position relative de ses éléments;
- la Figure 2 est une vue schématique partielle du collier d'assemblage autobloquant illustré sur la Figure 1 dans une deuxième position relative de ses éléments;
- la Figure 3 est une vue schématique partielle du collier d'assemblage autobloquant illustré sur la Figure 2 dans une troisième position relative de ses éléments; et,
- la Figure 4 est une vue schématique partielle d'un collier d'assemblage autobloquant selon une autre variante d'exécution,

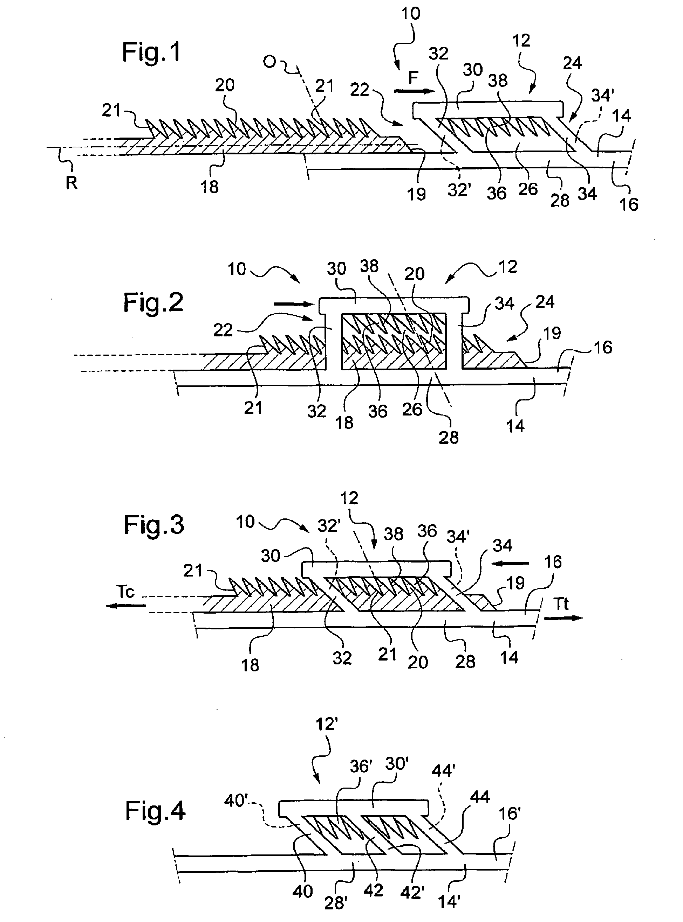

La Figure 1 illustre partiellement un collier d'assemblage autobloquant 10 et plus précisément une tête de blocage 12 longitudinale montée à une première extrémité 14 d'une lanière crantée 16. Cette lanière crantée 16 se prolonge pour former une boucle non représentée jusqu'à une seconde extrémité 18 que l'on retrouve partiellement à l'opposé de la première extrémité 14 par rapport à la tête de blocage 12, et qui se termine par une extrémité libre 19. Le collier d'assemblage autobloquant 10 est avantageusement moulée d'une seule pièce en matière plastique et la lanière crantée 16 et ainsi formée à plat lors du moulage. La lanière crantée 16 présente une section droite rectangulaire et elle est munie de crans de lanière 20 orientés sensiblement radialement vers l'extérieur de la boucle formée. Les crans de lanière 20 s'étendent aussi transversalement sur la largeur de la lanière crantée 16, et ils présentent chacun un flanc d'appui 21 de cran de lanière 20, opposé à l'extrémité libre 19. On observera que les flancs d'appui 21 de cran de lanière 20 sont inclinés selon un demi-plan D opposé à l'extrémité libre 19 et formant un angle aiguë avec le plan moyen Pe défini par la seconde extrémité 18. La tête de blocage 12 présente une extrémité d'entrée 22, une extrémité de sortie 24, ou extrémité de liaison, et un chemin de passage 26 de section rectangulaire également qui s'étend de l'extrémité d'entrée 22 à l'extrémité de sortie 24 de manière à autoriser le passage de la lanière crantée 16.

La tête de blocage 12 présente une partie d'appui 28 et elle est reliée à la première extrémité 14 de la lanière crantée 16 par l'intermédiaire de l'extrémité de liaison. La partie d'appui 28 est orientée dans le prolongement de la première extrémité 14. En outre, une partie crantée 30 est montée à pivotement sur la partie d'appui 28 et en regard de cette dernière, par l'intermédiaire de deux paires de biellettes latérales, une première paire 32, 32' située vers l'extrémité d'entrée 22 de la tête de blocage 12 et une seconde paire 34, 34' située vers l'extrémité de sortie 24 de la tête de blocage 12. Les biellettes latérales 32, 32' et 34, 34' sont d'une même longueur, et celles qui apparaissent sur le dessin 32, 34 en avant, masquent celles 32', 34' qui s'étendent en arrière du dessin. On observera qu'elles sont inclinées vers l'extrémité d'entrée 22 d'un angle voisin de 45° par rapport à la partie d'appui 28 de manière à maintenir la partie crantée 30 en regard et à distance de la partie d'appui 28. Les biellettes latérales 32, 32' et 34, 34' présentent chacune deux extrémités, qui sont respectivement montées articulées sur la partie d'appui 28 et sur la partie crantée 30. Elles sont alors mobiles en rotation par rapport à la partie d'appui 28 parallèlement au plan de la Figure coupant longitudinalement et perpendiculairement la partie d'appui 28. Ainsi, la partie crantée 30 et la partie d'appui 28 reliées par les deux paires de biellettes latérales 32, 32' et 34, 34', forment ensemble deux parallélogrammes déformables latéraux parallèles, ce qui permet de maintenir la partie d'appui 28 et la partie crantée 30 sensiblement parallèles entre elles.

La partie crantée 30 présente une pluralité de crans 36 de partie crantée 30 inclinés vers la première extrémité 14 de lanière crantée 16. Les crans 36 de partie crantée 30 s'étendent également transversalement par rapport à la direction longitudinale de la lanière crantée 16 et ils présentent chacun un flanc d'appui 38 de cran 36 de partie crantée 30, définissant un demi-plan moyen incliné vers l'extrémité de sortie 24 en formant un angle aigu avec le plan moyen défini par la partie crantée 30.

Ainsi, à partir de l'état de repos de la tête blocage 12 telle que représentée sur la Figure 1, la partie crantée 30 supportée par les quatre biellettes latérales 32, 32' et 34, 34', est entraînée vers la première extrémité 14 selon la flèche F. On prévoit la mise en oeuvre d'une butée d'entraînement non représentée, sur la partie crantée 30 du côté de l'extrémité d'entrée 22, afin de pouvoir entraîner plus aisément cette partie crantée 30. De la sorte, les quatre biellettes latérales 32, 32' et 34, 34' pivotent vers la première extrémité 14, et sur la Figure 1, dans le sens des aiguilles d'une montre de telle sorte que la partie crantée 30 est entraînée en pivotement par rapport à la partie d'appui 28 et s'écarte de cette partie d'appui 28. Les deux paires de biellettes latérales 32, 32' et 34, 34' pivotent chacune autour d'un axe de pivotement qui s'étend sensiblement perpendiculairement au plan de la figure, sensiblement parallèlement à la partie d'appui 28, et plus précisément qui traverse cette partie d'appui 28. Partant, tout point de la partie crantée 30 pivote autour d'un axe de pivotement sensiblement parallèle à la partie d'appui 28. Ainsi, lorsque les quatre biellettes latérales 32, 32' et 34, 34', sont sensiblement perpendiculaires à la partie d'appui 28, comme l'illustre la Figure 2, la partie crantée 30 et partant, lesdits crans 36 de partie crantée 30, sont écartées de la partie d'appui 28 et le chemin de passage 26 de la tête de blocage 12 en est d'autant agrandi selon une direction perpendiculaire à la partie d'appui 28.

Dans cette position respective de la partie d'appui 28 et de la partie crantée 30 il est alors aisé d'introduire la seconde extrémité 18 de lanière crantée 16 à travers l'extrémité d'entrée 22 pour l'enfiler ensuite à travers le chemin de passage 26 de manière à ce qu'au moins l'extrémité libre 19 de lanière crantée 16 soit située en dehors du chemin de passage 26 et au-delà de l'extrémité de sortie 24. Bien évidemment, la seconde extrémité 18 est introduite à travers le chemin de passage 26 de façon à ce que les crans 20 de lanière crantée 16 viennent s'étendre en regard des crans 36 de partie crantée 30.

À partir de cette position illustrée sur la Figure 2, la partie crantée 30 est relâchée et alors elle reprend sa position de repos tel qu'illustrée sur la Figure 1 où elle est dans une position rapprochée de la partie d'appui 28. Ainsi, les crans 36 de partie crantée 30 viennent s'intercaler entre les crans 20 de lanière crantée 16 comme le montre la Figure 3.

Si la boucle formée par la lanière crantée 16 autour d'un faisceau quelconque, est relativement serré, des tensions Tc et Tt qui s'exercent respectivement sur la seconde extrémité 18 et sur la première extrémité 14 dans des sens opposés est respectivement à l'opposé de la tête de blocage 12, ont alors un double effet. Tout d'abord, la seconde extrémité 18 dont les crans 20 de lanière crantée 16 sont en prise avec les crans 36 de partie crantée 30 provoque l'entraînement à force en pivotement de la partie crantée 30, ce qui force le rapprochement de la partie crantée 30 et de la partie d'appui 28 et par conséquent forme étau pour la seconde extrémité 18.

Cette dernière est alors parfaitement prisonnière de la tête de blocage 12. Au surplus, compte tenu de l'inclinaison des flancs d'appui 21 de cran de lanière 20 et des flancs d'appui 38 de cran 36 de la partie crantée 30, qui sont respectivement en appui les uns sur les autres selon un plan oblique par rapport aux tensions Tc et Tt qui s'exercent respectivement sur la seconde extrémité 18 et sur la première extrémité 14 dans des sens opposés, la partie crantée 30 et la seconde extrémité 18 tendent à être entraînées l'une vers l'autre et plaquées l'une contre l'autre ; car lesdits flancs tendent à être entraînés en glissement les uns contre les autres en formant rampe. Ainsi solidaires l'une de l'autre, la traction exercée en sens opposés sur la seconde extrémité 18 et sur la première extrémité 14 assure le rapprochement de la partie crantée 30 et de la partie d'appui 28. Ainsi, la seconde extrémité 18 est doublement bloquée à travers la tête de blocage 12.

Par ailleurs, la butée d'entraînement précitée, peut être avantageusement utilisé afin de permettre le déblocage de la seconde extrémité 18, en entraînant à force cette butée d'entraînement, et partant la partie crantée 30, de l'extrémité d'entrée 22 vers l'extrémité de sortie 24.

On se reportera à présent à la Figure 4 illustrant un autre mode de mise en oeuvre d'une tête de blocage 12' conforme à l'invention. Cette tête de blocage 12' présente une partie crantée 30' et une partie d'appui 28' prolongeant la première extrémité 14' d'une lanière crantée 16'. En revanche, elle présente non plus deux paires de biellettes, mais trois paires de biellettes 40, 40'; 42, 42'; et 44, 44'. Ainsi, il est possible d'allonger sensiblement la partie crantée 30' de manière à obtenir une plus grande surface de contact avec la lanière crantée 16' et ainsi, un meilleur blocage à travers la tête de blocage 12', notamment lorsque les tensions exercées dans la boucle et dans les extrémités de lanière crantée 16' sont relativement faibles.

On observera, que l'allongement de la partie crantée, 30, 30', quel que soit le mode de mise en oeuvre, et partant, l'augmentation du nombre de crans 36, 36', permet un meilleur serrage en comparaison des colliers d'assemblage selon l'art antérieur, où la languette crantée ne présente que quelques dents.

Selon un mode de mise en oeuvre de l'invention non représenté, on prévoit une tête de blocage conforme à l'invention équipée d'une seule paire de biellettes.

## Revendications

1. Collier d'assemblage autobloquant (10) comprenant une lanière crantée (16) et une tête de blocage longitudinale (12) solidaire de ladite lanière crantée, ladite tête de blocage longitudinale (12) présentant une extrémité de liaison (24) reliée à ladite lanière crantée et à l'opposé, une extrémité d'entrée (22) adaptée à recevoir une extrémité libre (19) de ladite lanière crantée (16) pour enfiler ladite lanière crantée à travers ladite tête de blocage longitudinale (12) en formant une boucle, ladite tête de blocage longitudinale (12) présentant en outre une partie d'appui (28) et une partie crantée (30) en regard, ladite partie crantée étant mobile par rapport à ladite partie d'appui, ladite lanière crantée (16) étant destinée à être engagée entre ladite partie d'appui (28) et ladite partie crantée (30) lorsque ladite lanière crantée (16) est enfilée à travers ladite tête de blocage longitudinale (12), ladite partie crantée (30) étant destinée à coopérer avec ladite lanière crantée (16) lorsque ladite boucle est mise sous tension de manière à entraîner ladite partie crantée (30) vers ladite partie d'appui (28) pour prendre en étau ladite lanière crantée ;
**caractérisé en ce que** ladite partie crantée (30) et ladite partie d'appui (28) sont reliées ensemble par des biellettes latérales (32, 32' ; 34, 34') pour permettre le pivotement de ladite partie crantée (30) de ladite extrémité de liaison (24) vers ladite extrémité d'entrée (22) de ladite tête de blocage longitudinale lorsque ladite partie crantée (30) coopère avec ladite lanière crantée (16).

2. Collier d'assemblage autobloquant selon la revendication 1, **caractérisé en ce que** ladite partie crantée (30) pivote autour d'un axe de pivotement sensiblement parallèle à ladite partie d'appui (28).

3. Collier d'assemblage autobloquant selon la revendication 2, **caractérisé en ce que** ledit axe de pivotement de ladite partie crantée (30) s'étend dans un plan moyen défini par ladite partie d'appui (28).

4. Collier d'assemblage autobloquant selon la revendication 2 ou 3, **caractérisé en ce que** ledit axe de pivotement de ladite partie crantée (30) s'étend sensiblement perpendiculairement à ladite tête de blocage longitudinale (12).

5. Collier d'assemblage autobloquant selon l'une quelconque des revendications 1 à 4, **caractérisé en ce que** ladite partie crantée (30) est en outre mobile en pivotement de ladite extrémité d'entrée (22) vers ladite extrémité de liaison (24) de ladite tête de blocage longitudinale (12) lorsque ladite lanière crantée (16) est enfilée à travers ladite tête de blocage longitudinale (12).

6. Collier d'assemblage autobloquant selon l'une quelconque des revendications 1 à 5, **caractérisé en ce que** ladite lanière crantée (16) présente des crans (20) de lanière inclinés dans un sens opposé à ladite extrémité libre de lanière (19), tandis que ladite partie crantée (30) présente des crans (36) de partie crantée inclinés dans un sens opposé à ladite extrémité d'entrée (22) de ladite tête de blocage longitudinale (12).

7. Collier d'assemblage autobloquant selon l'une quelconque des revendications 1 à 6, **caractérisé en ce que** ladite partie crantée (30) et ladite partie d'appui (28) sont reliées ensemble par des moyens flexibles (32, 32' ; 34, 34').

8. Collier d'assemblage autobloquant selon l'une quelconque des revendications 1 à 7, **caractérisé en ce que** lesdites biellettes latérales (32, 32' ; 34, 34') comprennent au moins deux paires (32, 32' ; 34, 34') de biellettes latérales opposées respectivement reliées à ladite partie crantée (30) et ladite partie d'appui (28) pour former deux parallélogrammes déformables aptes à maintenir ladite partie crantée (30) et ladite partie d'appui (28) sensiblement parallèles entre elles.

9. Collier d'assemblage autobloquant selon l'une quelconque des revendications 1 à 8, **caractérisé en ce qu'**il est moulé d'une seule pièce dans un matériau polymère.

## Patentansprüche

1. Selbstblockierende Montageschelle (10), umfassend einen gezahnten Riemen (16) und einen längsgerichteten Kopf (12) zur Blockierung, der ein fester Bestandteil des gezahnten Riemens ist, wobei der längsgerichtete Kopf (12) zur Blockierung ein mit dem gezahnten Riemen (16) verbundenes Ende (24) zum Herstellen einer Verbindung, und, gegenüberliegend, ein Eingangsende (22) aufweist, das dafür ausgelegt ist, ein freies Ende (19) des gezahnten Riemens (16) aufzunehmen., um den gezahnten Riemen durch den längsgerichteten Kopf (12) zu Blockierung hindurch zu stecken, wobei eine Schlaufe gebildet wird, wobei der längsgerichtete Kopf (12) zur Blockierung des Weiteren einen Auflagebereich (28) und, gegenüberstehend, einen gezahnten Bereich (30) aufweist, wobei der gezahnte Bereich im Bezug auf den Auflagebereich beweglich ist und wobei der gezahnte Riemen (16) dafür bestimmt ist, zwischen den Auflagebereich (28) und den gezahnten Bereich (30) eingebracht zu werden, wenn der gezahnte Riemen (16) durch den längsgerichteten Kopf (12) zur Blockierung gesteckt wird, wobei der gezahnte Bereich (30) dazu bestimmt ist, mit dem gezahnten Riemen (16) zusammen zu wirken, wenn die Schlaufe gespannt wird, und zwar in der Art und Weise, dass der gezahnte Bereich (30) an den Auflagebereich (28) heran gezogen wird, um den gezahnten Riemen festzuhalten; **dadurch gekennzeichnet, dass** der gezahnte Bereich (30) und der Auflagebereich (28) durch seitliche Gestänge (32, 32', 34, 34') miteinander verbunden sind, um das Schwenken des gezahnten Bereichs (30) von dem Ende (24) zum Herstellen einer Verbindung her auf das Eingangsende (22) des längsgerichteten Kopfes (12) zur Blockierung hin zu ermöglichen, wenn der gezahnte Bereich (30) mit dem gezahnten Riemen (16) zusammenwirkt.

2. Selbstblockierende Montageschelle nach Anspruch 1, **dadurch gekennzeichnet, dass** der gezahnte Bereich (30) um eine Schwenkachse schwenkt, die sich im Wesentlichen parallel zu dem Auflagebereich (28) erstreckt.

3. Selbstblockierende Nlontageschelle nach Anspruch 2, **dadurch gekennzeichnet, dass** sich die Schwenkachse des gezahnten Bereichs (30) in einer mittleren Ebene erstreckt, die durch den Auflagebereich (28) definiert ist.

4. Selbstblockierende Montageschelle nach Anspruch 2 oder 3, **dadurch gekennzeichnet, dass** die Schwenkachse des gezahnten Bereichs (30) sich im. Wesentlichen senkrecht zu dem längsgerichteten Kopf (12) zur Blockierung erstreckt.

5. Selbstblockierende Montageschelle nach irgend einem der Ansprüche 1 bis 4, **dadurch gekennzeichnet, dass** der gezahnte Bereich (30) weiterhin in einer Schwenkbewegung von dem Eingangsende (22) des längsgerichteten Kopfes (12) zur Blockierung in Reichtung auf das Ende (24) zum Herstellen einer Verbindung hin beweglich ist, wenn der gezahnte Riemen (16) durch den längsgerichteten Kopf (12) zur Blockierung hindurch geführt wird.

6. Selbstblockierende Montageschelle nach irgend einem der Ansprüche 1 bis 5, **dadurch gekennzeichnet, dass** der gezahnte Riemen (16) Riemenzähne (20) aufweist, die in einer Richtung geneigt sind, welche dem freien Ende (19) des Riemens entgegengerichtet ist, wogegen der gezahnte Bereich (30) Zähne (36) des gezahnten Bereichs aufweist, die in einer Richtung geneigt sind, welche dem Eingangsende (22) des längsgerichteten Kopfes (12) zur Blockierung entgegengerichtet ist.

7. Selbstblockierende Montageschelle nach irgend einem der Ansprüche 1 bis 6, **dadurch gekennzeichnet, dass** der gezahnte Bereich (30) und der Auflagebereich (28) durch flexible Mittel (32, 32', 34, 34') miteinander verbunden sind.

8. Selbstblockierende Montageschelle nach irgend einem der Ansprüche 1 bis 7, **dadurch gekennzeichnet, dass** die seitlichen Gestänge (32, 32', 34, 34') wenigstens zwei Paare (32; 32', 34, 34') von seitlichen, einander gegenüber liegenden Gestängen umfassen, die jeweils mit dem gezahnten Bereich (30) beziehungsweise dem Auflagebereich (28) verbunden sind, um zwei verformbare Parallelogramme zu bilden, die dazu geeignet sind, den gezahnten Bereich (30) und den Auflagebereich (28) im Wesentlichen parallel zeinander zu halten.

9. Selbstblockierende Montageschelle nach irgend einem der Ansprüche 1 bis 8, **dadurch gekennzeichnet, dass** sie in einem Stück aus einem polymeren Werkstoff begossen ist.

## Claims

1. Self-locking assembly collar (10) comprising a notched strap (16) and a longitudinal locking head (12) which is rigidly connected to said notched strap, said longitudinal locking head (12) having a connection end (24) which is connected to said notched strap and, at the opposite end, an entry end (22) suitable for receiving a free end (19) of said notched strap (16) in order to feed said notched strap through said longitudinal locking head (12) to form a loop, said longitudinal locking head (12) also having a bearing portion (28) and an opposing notched portion (30), said notched portion being movable with respect to said bearing portion, said notched strap (16) being designed for engagement between said bearing portion (28) and said notched portion (30) when said notched strap (16) is fed through said longitudinal locking head (12), said notched portion (30) being designed to cooperate with said notched strap (16) when said loop is tensioned in such a way as to pull said notched portion (30) towards said bearing portion (28) in order to clamp said notched strap, **characterised in that** said notched portion (30) and said bearing portion (28) are interconnected by lateral links (32, 32'; 34, 34') to allow said notched portion (30) to pivot from said connection end (24) towards said entry end (22) of said longitudinal locking head when said notched portion (30) cooperates with said notched strap (16).

2. Self-locking assembly collar according to claim 1, **characterised in that** said notched portion (30) pivots about a pivot axis which is substantially parallel to said bearing portion (28).

3. Self-locking assembly collar according to claim 2, **characterised in that** said pivot axis of said notched portion (30) extends in a central plane defined by said bearing portion (28).

4. Self-locking assembly collar according to either claim 2 or claim 3, **characterised in that** said pivot axis of said notched portion (30) extends substantially perpendicular to said longitudinal locking head (12).

5. Self-locking assembly collar according to any of claims 1 to 4, **characterised in that** said notched portion (30) is also movable by means of pivoting from said entry end (22) towards said connection end (24) of said longitudinal locking head (12) when said notched strap (16) is fed through said longitudinal locking head (12).

6. Self-locking assembly collar according to any of claims 1 to 5, **characterised in that** said notched strap (16) has strap notches (20) which are inclined in the opposite direction to said free strap end (19), whereas said notched portion (30) has notched portion notches (36) which are inclined in the opposite direction to said entry end (22) of said longitudinal locking head (12).

7. Self-locking assembly collar according to any of claims 1 to 6, **characterised in that** said notched portion (30) and said bearing portion (28) are interconnected by flexible means (32, 32'; 34, 34').

8. Self-locking assembly collar according to any of claims 1 to 7, **characterised in that** said lateral links (32, 32'; 34, 34') comprise at least two pairs (32, 32'; 34, 34') of opposed lateral links which are each connected to said notched portion (30) and said bearing portion (28) to form two deformable parallelograms which are capable of keeping said notched portion (30) and said bearing portion (28) substantially mutually parallel.

9. Self-locking assembly collar according to any of claims 1 to 8, **characterised in that** it is formed from a single piece in a polymer material.
